# EUROPEAN PATENT APPLICATION

(11) **EP 4 660 157 A1**
(43) Date of publication of application: **10.12.2025**
(21) Application number: 24750086.1
(22) Date of filing: 24.01.2024
(51) Int. Cl.: C03B 5/235

(54) **METHOD FOR PRODUCING GLASS ARTICLE**

(30) Priority: 31.01.2023 JP 2023013042
(71) Applicant: Nippon Electric Glass Co., Ltd., Otsu-shi, Shiga 520-8639 (JP)
(72) Inventor: ASAI, Kosuke, Otsu-shi, Shiga 520-8639 (JP); ITAZU, Hiroyuki, Otsu-shi, Shiga 520-8639 (JP); TOKUNAGA, Shingo, Otsu-shi, Shiga 520-8639 (JP)
(74) Representative: Tetzner, Michael
(86) International application number: PCT/JP2024/002034
(87) International publication number: WO 2024/162136

(57) **Abstract**

Provided is a manufacturing method for a glass article, including a melting step of heating and melting first glass raw materials (Gr1) in a melting furnace (1) through combustion heating to form molten glass while the first glass raw materials (Gr1) are supplied onto the molten glass (Gm) in the melting furnace (1). The melting step includes burning a fuel under a state in which part of the first glass raw materials (Gr1) are scattered in the melting furnace (1).

## Description

### Technical Field

The present invention relates to a manufacturing method for a glass article.

### Background Art

A manufacturing process for a glass article includes a melting step of heating and melting glass raw materials in a melting furnace. In the melting step, a method of heating and melting glass raw materials in a melting furnace by using a burner that burns fuel to form a flame has been widely used (for example, Patent Literature 1). As the fuel, a hydrocarbon fuel such as a natural gas fuel is generally used.

### Citation List

Patent Literature 1: JP 2021-70534 A

### Summary of Invention

### Technical Problem

When the hydrocarbon fuel is used as the fuel to be supplied to the burner, there is a problem in that carbon dioxide contained in an exhaust gas generated in the melting step increases. In addition, when the hydrocarbon fuel is used, it is desired to increase an in-furnace temperature to improve energy efficiency.

Meanwhile, as a result of intensive researches made by the inventors of the present application, the inventors have found that, in combustion of a fuel including hydrogen in order to reduce carbon dioxide in an exhaust gas, even in the case where the fuel including hydrogen is supplied in an amount so as to achieve a heat generation amount comparable to that in the case where a fuel including hydrocarbon alone is used, a new problem arises in that the in-furnace temperature is liable to be reduced and the melting step becomes unstable. Thus, also in the case where the fuel including hydrogen is used, it is desired to increase the in-furnace temperature to improve the energy efficiency.

The present invention has an object of increasing the in-furnace temperature to stabilize the melting step.

### Solution to Problem

(1) According to an embodiment of the present invention, which has been devised to achieve the above-mentioned object, there is provided a manufacturing method for a glass article, comprising a melting step of heating and melting first glass raw materials in a melting furnace through combustion heating to form molten glass while the first glass raw materials are supplied onto the molten glass in the melting furnace, wherein the melting step includes burning a fuel under a state in which at least one of part of the first glass raw materials or second glass raw materials that are different from the first glass raw materials are scattered in the melting furnace.
   With this configuration, an in-furnace temperature is increased, and the melting step becomes stable. Possible factors for providing such effects are, for example, as described below.
   (a) A ceiling temperature of the melting furnace is increased by a heat retaining effect of the first glass raw materials and/or the second glass raw materials scattered in the melting furnace.
   (b) The in-furnace temperature is increased by solid radiation of the first glass raw materials and/or the second glass raw materials scattered in the melting furnace.
   (c) The in-furnace temperature is increased by heat generation (heat dissipation) occurring along with a reaction of a water content generated through combustion of the fuel and the scattered first glass raw materials and/or second glass raw materials.
(2) In the above-mentioned configuration (1), when the first glass raw materials are scattered in the melting furnace, the first glass raw materials are preferred to include one or more kinds of a Li raw material, a Na raw material, a K raw material, a Ca raw material, a Sr raw material, a Ba raw material, a Cu raw material, a B raw material, and a Si raw material.
   With this configuration, the in-furnace temperature is easily increased. In addition, when the first glass raw materials scattered in the furnace are brought into contact with a flame formed by burning the fuel, a flame reaction occurs and a color of the flame changes in some cases. Accordingly, when raw materials causing a flame reaction are used, scattering of the first glass raw materials in the furnace can be recognized by the change in color of the flame.
(3) In the above-mentioned configuration (1) or (2), when the second glass raw materials are scattered in the melting furnace, the second glass raw materials are preferred to include one or more kinds of a Li raw material, a Na raw material, a K raw material, a Ca raw material, a Sr raw material, a Ba raw material, a Cu raw material, a B raw material, and a Si raw material.
   With this configuration, the in-furnace temperature is easily increased. In addition, when the second glass raw materials scattered in the furnace are brought into contact with a flame formed by burning the fuel, a flame reaction occurs and a color of the flame changes in some cases. Accordingly, when raw materials causing a flame reaction are used, scattering of the second glass raw materials in the furnace can be recognized by the change in color of the flame.
(4) In any one of the above-mentioned configurations (1) to (3), part of the first glass raw materials are preferred to be scattered in the melting furnace by supplying the first glass raw materials into the melting furnace from a position above a liquid surface of the molten glass.
   With this configuration, fine particles included in the first glass raw materials can be easily scattered in the melting furnace.
(5) In the above-mentioned configuration (4), the liquid surface of the molten glass is preferred to be covered with a batch layer formed of the first glass raw materials at a supply position of the first glass raw materials.
   With this configuration, absorption and dissolution of the fine particles included in the first glass raw materials into the molten glass can be suppressed by the batch layer. Accordingly, the fine particles included in the first glass raw materials are easily scattered in the melting furnace.
(6) In any one of the above-mentioned configurations (1) to (5), the second glass raw materials may be scattered in the melting furnace by supplying the second glass raw materials into the melting furnace from a position above a liquid surface of the molten glass, which is a position different from a supply position of the first glass raw materials.
   With this configuration, fine particles included in the second glass raw materials can be easily scattered in the melting furnace.
(7) In the above-mentioned configuration (6), the second glass raw materials are preferred to be supplied from a position distant from a flame formed by burning the fuel and toward the flame.
   With this configuration, the second glass raw materials and the flame are easily caused to react with each other.
(8) In any one of the above-mentioned configurations (1) to (7), the fuel is preferred to include at least one of a hydrocarbon fuel or a hydrogen fuel.

That is, according to the present invention, not only in the case where the hydrocarbon fuel is used as a fuel, but also in the case where a hydrogen fuel is used as a fuel or in the case where a mixed fuel of the hydrocarbon fuel and the hydrogen fuel is used as a fuel, the in-furnace temperature can be increased. Moreover, in the case where the hydrogen fuel is used as a fuel, it is possible to reduce carbon dioxide in an exhaust gas while suppressing a decrease in the in-furnace temperature.

### Advantageous Effects of Invention

According to the present invention, the in-furnace temperature can be increased to stabilize the melting step.

### Brief Description of Drawings

FIG. 1 is a longitudinal sectional view for illustrating a melting furnace included in a manufacturing apparatus for a glass article according to a first embodiment of the present invention.
FIG. 2 is a sectional view taken along the line A-A of FIG. 1.
FIG. 3 is a combustion system diagram of a burner included in the melting furnace of FIG. 1.
FIG. 4 is a longitudinal sectional view for illustrating a melting furnace included in a manufacturing apparatus for a glass article according to a second embodiment of the present invention.
FIG. 5 is a sectional view taken along the line B-B of FIG. 4.
FIG. 6 is a graph for showing a relationship between a spray amount of glass raw materials and heat flux.

### Description of Embodiments

Embodiments of the present invention are described below with reference to the attached drawings. Overlapping description may be omitted by denoting corresponding constituent elements in the embodiments by the same reference symbols. When only part of a configuration is described in each of the embodiments, a configuration in other embodiments that has already been described may be applied to other parts of the configuration. In addition, configurations may be combined in a combination explicit in the description of each of the embodiments, and not only that, part of configurations of a plurality of the embodiments may be combined in an even implicit combination as long as the combination has no particular disadvantage.

### <First Embodiment>

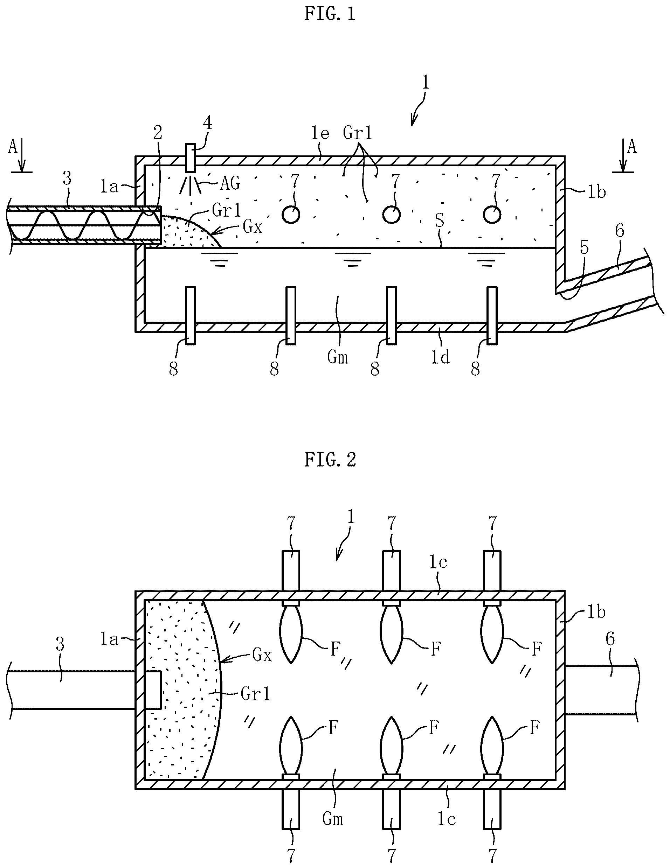

As illustrated in FIG. 1 and FIG. 2, a manufacturing apparatus for a glass article according to a first embodiment comprises a melting furnace 1. The manufacturing apparatus further comprises, as required, a fining chamber that subjects a molten glass Gm generated in the melting furnace 1 to fining treatment, a homogenization chamber (stirring chamber) that subjects the molten glass Gm subjected to the fining treatment to stirring treatment, a forming device that forms a glass article from the molten glass Gm subjected to the stirring treatment, and the like. The glass article to be manufactured by the manufacturing apparatus is not particularly limited, and examples thereof include a glass sheet (including a glass film), a glass roll (including a roll core and a glass film wound in a roll shape around the roll core), a glass fiber, an optical glass component, a glass tube, and a glass block.

The melting furnace 1 has a space for performing a melting step of generating the molten glass Gm. In the melting furnace 1, the molten glass Gm is continuously generated from first glass raw materials Gr1.

The melting furnace 1 includes a front wall 1a positioned on an upstream side, a rear wall 1b positioned on a downstream side, side walls 1c positioned on both sides in a width direction, a bottom wall 1d positioned in a lower part, and a ceiling wall 1e positioned in an upper part. Those walls 1a to 1e form a partitioned space for holding the molten glass Gm.

Each of the walls 1a to 1e of the melting furnace 1 is formed of a refractory brick. Examples of the refractory brick that may be used include a zirconia-based electrocast brick, an alumina-based electrocast brick, an alumina-zirconia-based electrocast brick, an AZS (Al-Zr-Si)-based electrocast brick, and a dense fired brick.

The front wall 1a has a feed port 2 at a position above a liquid surface S of the molten glass Gm. The feed port 2 is provided with a supply device 3 for feeding the first glass raw materials Gr1 such as a screw feeder. The supply device 3 supplies the first glass raw materials Gr1 from the position above the liquid surface S of the molten glass Gm into the furnace through the feed port 2. That is, there is a level difference between the feed port 2 and the liquid surface S of the molten glass Gm, and in the process where part of the first glass raw materials Gr1 supplied from the supply device 3 fall or flow, the glass raw materials are easily scattered in a furnace atmosphere above the liquid surface S of the molten glass Gm. In other words, a state in which a desired amount of the fine particles of the first glass raw materials Gr1 are floating in the furnace atmosphere is easily formed. The numbers and positions of arrangement of the feed port 2 and the supply device 3 may be appropriately changed depending on a size of the melting furnace 1 and the like. For example, a plurality of feed ports 2 and supply devices 3 may be arranged.

The liquid surface S of the molten glass Gm is covered with a batch layer Gx including unmelted first glass raw materials Gr1. An area of a region of the liquid surface S of the molten glass Gm in the melting furnace 1, which is covered with the batch layer Gx, is preferably from 20% to 70% of the total area of the liquid surface S of the molten glass Gm. By setting the area of the region to be covered with the batch layer Gx to 20% or more, heat dissipation from the liquid surface S of the molten glass Gm can be reduced and hence energy efficiency is improved. In addition, in the process where the first glass raw materials Gr1 in the batch layer Gx flow, part of the glass raw materials are easily scattered in the furnace atmosphere above the liquid surface of the molten glass Gm. By setting the area of the region to be covered with the batch layer Gx to 70% or less, even when in-furnace conditions change due to a change in flow rate and the like and hence the first glass raw materials Gr1 are more liable to stagnate, feeding of the first glass raw materials Gr1 can be continued by allowing the batch layer Gx to flow over a region that is not covered with the batch layer Gx. As a result, the molten glass Gm can be continuously generated in a stable manner.

The liquid surface S of the molten glass Gm is covered with a foam layer (not shown) formed by floating of bubbles generated in the molten glass Gm. The batch layer Gx and the foam layer preferably cover from 80% to 100%, more preferably from 90% to 100%, still more preferably from 95% to 100% of the liquid surface S of the molten glass Gm. When the batch layer Gx and the foam layer cover 80% or more of the liquid surface S of the molten glass Gm, heat dissipation from the liquid surface S of the molten glass Gm can be reduced and hence the energy efficiency is improved.

In this embodiment, a nozzle 4 that jets a gas (e.g., oxygen) AG to the first glass raw materials Gr1 and/or the batch layer Gx supplied from the supply device 3 is arranged. When the gas AG is jetted from the nozzle 4, part of the first glass raw materials Gr1 are stirred up, and a scattered state of the first glass raw materials Gr1 in the furnace is accelerated. The nozzle 4 is not an essential configuration. That is, the first glass raw materials Gr1 can be scattered in the furnace even when the gas AG is not jetted.

The rear wall 1b has an outflow port 5 positioned below the liquid surface S of the molten glass Gm. A transfer flow passage 6 for transferring the molten glass Gm to the downstream side is connected to the outflow port 5, and the molten glass Gm is successively supplied from the melting furnace 1 to steps to be performed on the downstream side. The transfer flow passage 6 and the configuration on the downstream side thereof are appropriately changed depending on the kind of a glass article to be manufactured and the like.

A plurality of burners 7 that each burn a fuel to form a flame F are arranged in each of the side walls 1c of the melting furnace 1 on both sides. The flame F formed by each of the burners 7 heats the first glass raw materials Gr1 and/or the molten glass Gm from a position above the liquid surface S of the molten glass Gm. The number and positions of arrangement of the burners 7 may be appropriately changed depending on, for example, the size of the melting furnace 1. In FIG. 1, the illustration of the flame F is omitted.

The fuel to be supplied to each of the burners 7 includes one or more kinds of a hydrogen fuel, an ammonia fuel, and a hydrocarbon fuel. That is, the fuel may be the hydrogen fuel alone, may be the ammonia fuel alone, may be the hydrocarbon fuel alone, or may be a mixed fuel including two kinds or three kinds of the hydrogen fuel, the ammonia fuel, and the hydrocarbon fuel. In addition, the fuels to be supplied to the respective burners 7 are not required to be the same and may be different from each other. For example, a butane gas, a propane gas, a petroleum gas, or a natural gas may be used as the hydrocarbon fuel. In view of further reduction of CO₂ included in an exhaust gas, it is preferred that a natural gas be used as the hydrocarbon fuel. In the following embodiments, a case in which the hydrogen fuel is used as the fuel is exemplified.

A plurality of rod-shaped electrodes 8 are arranged in the bottom wall 1d of the melting furnace 1. The electrodes 8 heat the molten glass Gm through application of a current in a state of being immersed in the molten glass Gm. The shapes, number, and positions of arrangement of the electrodes 8 may be appropriately changed depending on the size of the melting furnace 1 and the like. For example, the electrodes 8 may each be sheet-shaped. In addition, the electrodes 8 may be arranged in each of the side walls 1c of the melting furnace 1 in a state of being immersed in the molten glass Gm. In this embodiment, the molten glass Gm and/or the first glass raw materials Gr1 are heated by using both of the burners 7 and the electrodes 8. However, it is not always required that the electrodes 8 be arranged. From the viewpoint of improving energy efficiency, however, it is preferred that the electrodes 8 be also used so as to curtail outputs of the burners 7.

The first glass raw materials Gr1 supplied into the furnace by the supply device 3 include natural raw materials and/or chemical raw materials. The first glass raw materials Gr1 may include cullet.

Specifically, the first glass raw materials Gr1 preferably include specific raw materials including one or more kinds of a Li raw material, a Na raw material, a K raw material, a Ca raw material, a Sr raw material, a Ba raw material, a Cu raw material, a B raw material, and a Si raw material. The Li raw material is a raw material for generating Li₂O, and for example, lithium carbonate (Li₂CO₃) may be used as the Li raw material. The Na raw material is a raw material for generating Na₂O, and for example, sodium carbonate (Na₂CO₃) may be used as the Na raw material. The K raw material is a raw material for generating K₂O, and for example, potassium carbonate (K₂CO₃) or potassium nitrate (KNO₃) may be used as the K raw material. The Ca raw material is a raw material for generating CaO, and for example, calcium carbonate (CaCO₃) may be used as the Ca raw material. The Sr raw material is a raw material for generating SrO, and for example, strontium carbonate (SrCO₃) or strontium nitrate (Sr(NO₃)₂) may be used as the Sr raw material. The Ba raw material is a raw material for generating BaO, and for example, barium carbonate (BaCO₃) or barium nitrate (Ba(NO₃)₂) may be used as the Ba raw material. The Cu raw material is a component for generating CuO, and for example, copper oxide (CuO) may be used as the Cu raw material. The B raw material is a component for generating B₂O₃, and for example, boric anhydride (B₂O₃) may be used as the B raw material. The Si raw material is a component for generating SiO₂, and for example, silicon oxide (SiO₂) may be used as the Si raw material. The first glass raw materials Gr1 may be raw materials derived from ore including the above-mentioned specific raw materials.

The first glass raw materials Gr1 preferably include fine particles each having a diameter of from 3 µm to 50 µm, and more preferably include fine particles each having a diameter of from 3 µm to 25 µm. When the first glass raw materials Gr1 include such fine particles, part of the first glass raw materials Gr1 are easily scattered in the furnace atmosphere above the liquid surface of the molten glass Gm. That is, in the process where the first glass raw materials Gr1 flow, the fine particles can be scattered in the furnace even when the gas AG is not jetted from the nozzle 4. In particular, the first glass raw materials Gr1 preferably include the above-mentioned specific raw materials as fine particles each having a diameter falling within the above-mentioned numerical ranges.

A scattered amount of the first glass raw materials Gr1 is preferably 0.1 g/min/m³ or more, more preferably 0.5 g/min/m³ or more, still more preferably 0.7 g/min/m³ or more, most preferably 1.0 g/min/m³ or more. In this way as well, part of the first glass raw materials Gr1 are easily scattered in the furnace atmosphere above the liquid surface of the molten glass Gm. Meanwhile, from the viewpoint of reducing the glass raw materials flowing out of the furnace along with the exhaust gas, an upper limit of the scattered amount of the first glass raw materials Gr1 is, for example, 3.0 g/min/m³ or less, preferably 2.0 g/min/m³ or less. The measurement of the scattered amount of the glass raw materials is performed with a dustmeter (Type 1, manufactured by Heubach DUSTMETER GmbH) in conformity with DIN 55992. In this case, a rotation speed of a rotating drum is set to 20 rpm, and a suction airflow rate is set to 5 L/min.

The batch layer Gx covering the liquid surface S of the molten glass Gm is melted while flowing. In this process, the fine particles of the first glass raw materials Gr1 for forming the batch layer Gx scatter into the furnace. Accordingly, it is assumed that when the liquid surface S of the molten glass Gm is covered with the batch layer Gx, a state of the fine particles of the first glass raw materials Gr1 scattered in the furnace is easily maintained.

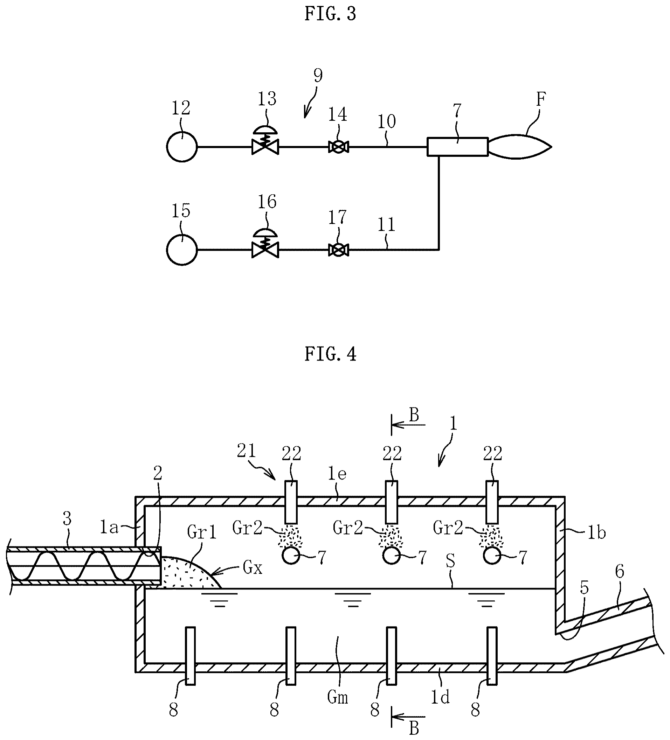

As illustrated in FIG. 3, pipes 9 for supplying a fuel and the like are connected to each of the burners 7. The pipes 9 include a fuel pipe 10 for supplying a hydrogen fuel to each of the burners 7, and a combustion-supporting gas pipe 11 for supplying oxygen serving as a combustion-supporting gas to each of the burners 7.

A hydrogen fuel source 12 including the hydrogen fuel stored therein is connected to one end of the fuel pipe 10, and each of the burners 7 is connected to the other end of the fuel pipe 10. The fuel pipe 10 is provided with a flow rate adjustment valve 13 that adjusts a flow rate of the hydrogen fuel, and a switching valve 14 that switches opening and closing of a flow passage for the hydrogen fuel flowing at the adjusted flow rate.

An oxygen source 15 including oxygen stored therein is connected to one end of the combustion-supporting gas pipe 11, and each of the burners 7 is connected to the other end of the combustion-supporting gas pipe 11. The combustion-supporting gas pipe 11 is provided with a flow rate adjustment valve 16 that adjusts the flow rate of oxygen, and a switching valve 17 that switches opening and closing of a flow passage for oxygen flowing at the adjusted flow rate. The supply of oxygen to each of the burners 7 through the combustion-supporting gas pipe 11 allows mixing of the hydrogen fuel with oxygen to make the hydrogen fuel more easily combustible. A gas other than oxygen may also be used as the combustion-supporting gas.

Next, a manufacturing method for a glass article using the manufacturing apparatus having the above-mentioned configuration is described.

The manufacturing method comprises a melting step of heating and melting the first glass raw materials Gr1 in the melting furnace 1 with the burners 7 to form the molten glass Gm while the first glass raw materials Gr1 are supplied onto the molten glass Gm in the melting furnace 1. Required steps are appropriately added as steps following the melting step in accordance with the kind of a glass article to be manufactured and the like.

In the melting step, a fuel including hydrogen is burned with the burners 7 under a state in which part of the first glass raw materials Gr1 are scattered in the melting furnace 1. With this configuration, the in-furnace temperature is hardly reduced even when a fuel including hydrogen is used. Accordingly, the melting step can be stabilized while carbon dioxide in an exhaust gas is reduced.

Possible factors for hardly reducing the in-furnace temperature and stabilizing the melting step are as described below.
(a) A temperature of the ceiling wall 1e of the melting furnace 1 is increased by a heat retaining effect of the first glass raw materials Gr1 scattered in the furnace.
(b) The in-furnace temperature is increased by solid radiation of the first glass raw materials Gr1 scattered in the furnace.
(c) The in-furnace temperature is increased by heat generation (heat dissipation) occurring along with a reaction of a water content generated through combustion of the fuel and the first glass raw materials Gr1 scattered in the furnace. When the fuel including hydrogen is burned, the water content is particularly and easily generated.

Regarding the above-mentioned item (c) in detail, when the first glass raw materials Gr1 contain calcium carbonate, for example, heat generation of 500 kJ (i.e., 815 kJ-315 kJ) per kg of the first glass raw materials Gr1 occurs by the following reactions.
CaCO₃=CaO+CO₂-315 kJ/kg (endothermic reaction)
CaO+H₂O=Ca(OH)₂+815 kJ/kg (heat dissipation reaction)

In particular, when the above-mentioned specific raw materials are used as the first glass raw materials Gr1, the effects of the first glass raw materials Gr1 scattered in the furnace (e.g., the heat retaining effect of the ceiling wall 1e, the solid radiation, and the heat generation reaction with the water content in the furnace) become significant, and the in-furnace temperature is easily increased. In addition, when the first glass raw materials Gr1 scattered in the furnace are brought into contact with the flame F of the burners 7, the color of the flame F changes by the flame reaction. As a result, scattering of the first glass raw materials Gr1 in the furnace can be easily recognized by the change in color of the flame F.

### <Second Embodiment>

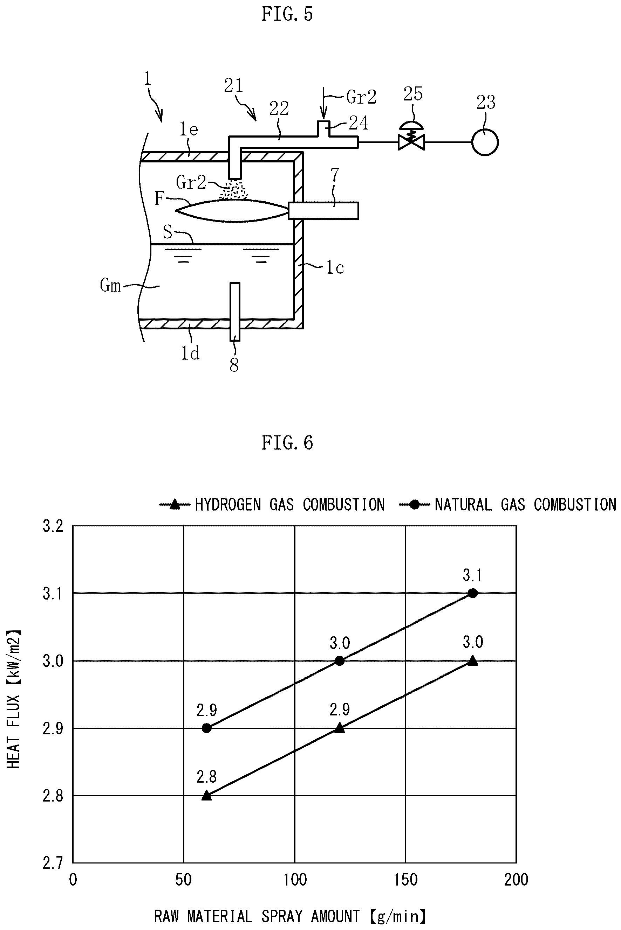

As illustrated in FIG. 4 and FIG. 5, a second embodiment of the present invention describes modification examples of the melting furnace 1 and the melting step. In the second embodiment, the melting furnace 1 further includes an auxiliary supply device 21 that supplies the second glass raw materials Gr2, which is arranged separately from the supply device 3 that supplies the first glass raw materials Gr1. In FIG. 4, the illustration of the flame F formed by each of the burners 7 is omitted.

The auxiliary supply device 21 includes nozzles 22 each serving as a spray device that sprays the second glass raw materials Gr2 toward the flame F from a position above the flame F formed by the burners 7. One end of each of the nozzles 22 is inserted into the furnace, and the other end of each of the nozzles 22 is connected to a carrier gas source 23 including a carrier gas (e.g., oxygen) stored therein for conveying the second glass raw materials Gr2. Each of the nozzles 22 is provided with a supply portion 24 that supplies the second glass raw materials Gr2 into each of the nozzles 22 and a flow rate adjustment valve 25 that adjusts the flow rate of the carrier gas. The adjustment of the flow rate of the carrier gas allows adjustment of the spray amount or spray range of the second glass raw materials Gr2 from a tip of each of the nozzles 22. A jetting direction of each of the nozzles 22 is not particularly limited as long as the second glass raw materials Gr2 can be jetted toward the flame F. For example, each of the nozzles 22 may spray the second glass raw materials Gr2 from sides toward the flame F.

When the second glass raw materials Gr2 are sprayed through the nozzles 22, the second glass raw materials Gr2 are brought into a state of being scattered in the furnace. Accordingly, even when the fuel including hydrogen is used in the melting step, the in-furnace temperature is hardly reduced and the melting step becomes stable owing to the effects of the second glass raw materials Gr2 scattered in the furnace (e.g., the heat retaining effect of the ceiling wall 1e, the solid radiation, and the heat generation reaction with the water content in the furnace).

The second glass raw materials Gr2 may be the same glass raw materials as or different glass raw materials from the first glass raw materials Gr1. Herein, the same glass raw materials mean glass raw materials having substantially the same raw material grades and blended ratios, and different glass raw materials mean glass raw materials having substantially different raw material grades and/or blended ratios. That is, the glass raw materials having the same raw material grades and different blended ratios are defined as different glass raw materials.

When the second glass raw materials Gr2 and the first glass raw materials Gr1 are the same glass raw materials, scattering of the second glass raw materials Gr2 in the furnace provides the same state as that in the case where part of the first glass raw materials Gr1 are scattered in the furnace.

When the second glass raw materials Gr2 and the first glass raw materials Gr1 are different glass raw materials, scattering of the second glass raw materials Gr2 in the furnace provides a state in which glass raw materials different from the first glass raw materials Gr1 are scattered in the furnace.

The second glass raw materials Gr2 preferably include specific raw materials including one or more kinds of a Li raw material, a Na raw material, a K raw material, a Ca raw material, a Sr raw material, a Ba raw material, a Cu raw material, a B raw material, and a Si raw material. In particular, when the first glass raw materials Gr1 are free of specific raw materials or when the first glass raw materials Gr1 have a small content of the specific raw materials, the second glass raw materials Gr2 including the specific raw materials are preferably sprayed into the furnace through the nozzles 22. In the above-mentioned manner, the second glass raw materials Gr2 including the specific raw materials are brought into a state of being scattered in the furnace, and the in-furnace temperature is easily increased. In addition, when the second glass raw materials Gr2 scattered in the furnace are brought into contact with the flame F of the burners 7, the color of the flame F changes by the flame reaction.

In the furnace, the first glass raw materials Gr1 supplied from the supply device 3 and the second glass raw materials Gr2 supplied from the auxiliary supply device 21 may each be in a state of being scattered. In the above-mentioned manner, the total scattered amount of the glass raw materials Gr1 and Gr2 in the atmosphere of the furnace increases, and thus it is conceived that reduction of in-furnace temperature can be further suppressed in the case where the fuel including hydrogen is used. However, the state of the furnace atmosphere in the melting step regarding the first glass raw materials Gr1 and the second glass raw materials Gr2 include (1) a state in which the first glass raw materials Gr1 alone are scattered in the furnace, (2) a state in which the second glass raw materials Gr2 alone are scattered in the furnace, and (3) a state in which the first glass raw materials Gr1 and the second glass raw materials Gr2 are scattered in the furnace.

In addition, the present invention is not limited to the mode involving direct spray of the second glass raw materials Gr2 toward the flame F as long as a mode allows formation of the state in which the second glass raw materials Gr2 are scattered in the furnace. For example, the second glass raw materials Gr2 may be sprayed into the furnace at a position different from the flame F such that the second glass raw materials Gr2 are not directly sprayed toward the flame F.

### Examples

Glass raw materials A, B, and C having glass compositions shown in Table 1 were prepared, and the scattered amount of each of the glass raw materials was measured with a dustmeter (Type 1, manufactured by Heubach DUSTMETER GmbH) in conformity with DIN 55992. The scattered amount of each of the glass raw materials was measured by introducing 10 g of the glass raw materials to be measured into a rotating drum of the dustmeter, rotating the rotating drum, and adsorbing generated dust onto filter paper. In this case, a rotation speed of the rotating drum was set to 20 rpm, and a suction airflow rate was set to 5 L/min. Table 2 shows the results.

**Table 1**

| (Mass%) | Glass raw materials A | Glass raw materials B | Glass raw materials C | Raw material particle size (µm) |
|---|---|---|---|---|
| SiO₂ | 55 | 60 | 70 | 5 to 50 |
| Al₂O₃ | 15 | 20 | 10 | 5 to 50 |
| B₂O₃ | 5 | 9 | 10 | 5 to 60 |
| CaO | 25 | 5 | 1 | 5 to 50 |
| BaO | - | 1 | 1 | 10 to 500 |
| Na₂O | - | - | 5 | 10 to 500 |
| K₂O | - | - | 3 | 10 to 800 |
| SrO | - | 5 | - | 10 to 500 |

**Table 2**

| | Glass raw materials A | Glass raw materials B | Glass raw materials C |
|---|---|---|---|
| Scattered amount (g/min/m³) | 1.2 | 0.2 | 0.3 |
| Average particle diameter (µm) | 5 | 10 | 7 |

It can be recognized from Table 2 that the glass raw materials having smaller average particle diameters provide larger scattered amounts. That is, it can be said that the first glass raw materials and/or the second glass raw materials to be scattered in the melting furnace preferably include fine particles.

Next, how heat flux was changed by the kind of glass raw materials to be scattered was measured. Specifically, as illustrated in FIG. 4 and FIG. 5, the glass raw materials to be measured were sprayed at 60 g/min toward the flames from above the flames formed by the burners, and the heat flux was measured with a heat flux sensor (CAPTHERM, manufactured by Captec Entreprise) arranged at a position below the flames formed by the burners. The heat flux was measured under a state in which molten glass was absent in the melting furnace in each of the case where a natural gas was burned with the burners and the case where a hydrogen gas was burned therewith. The glass raw materials of Li, Na, K, and Sr each had an average particle diameter of from 300 µm to 500 µm, and the glass raw materials of B, Si, and Ca each had an average particle diameter of from 10 µm to 100 µm. Table 3 shows the results.

**Table 3**

| Sprayed raw materials | No spraying | Li | B | Na | Si | K | Ca | Sr |
|---|---|---|---|---|---|---|---|---|
| Heat flux in combustion of natural gas (kW/m²) | 2.7 | 3.0 | 2.9 | 3.0 | 3.2 | 3.0 | 2.9 | 2.9 |
| Heat flux in combustion of hydrogen gas (kW/m²) | 2.1 | 2.5 | 2.4 | 2.6 | 2.4 | 2.9 | 2.8 | 2.4 |

It can be recognized from Table 3 that in both the cases where the natural gas is burned and where the hydrogen gas is burned, the heat flux is increased by scattering the glass raw materials (second glass raw materials) in the flames formed by the burners as compared to the case where the glass raw materials are not sprayed. Moreover, such increasing trend of heat flux can be recognized in each of the glass raw materials of Li, B, Na, Si, K, Ca, and Sr.

Further, how heat flux was changed by the spray amount of the glass raw materials was measured. Specifically, as illustrated in FIG. 4 and FIG. 5, while the spray amount of the Ca raw material sprayed toward the flames from above the flames formed by the burners was increased, the heat flux was measured with a heat flux sensor (CAPTHERM, manufactured by Captec Entreprise) arranged at a position below the flames formed by the burners. The heat flux was measured under a state in which molten glass was absent in the melting furnace in each of the case where a natural gas was burned with the burners and the case where a hydrogen gas was burned therewith. FIG. 6 shows the results.

It can be recognized from FIG. 6 that in both the cases where the natural gas is burned and where the hydrogen gas is burned, the heat flux is increased by increasing the spray amount (scattered amount) of the Ca raw material. The heat flux was measured by using the Ca raw material, but it is assumed that in both the cases where the natural gas is burned and where the hydrogen gas is burned, the heat flux is increased by increasing the spray amount of any other glass raw materials.

### Reference Signs List

1 melting furnace
2 feed port
3 supply device
4 gas jetting nozzle
5 outflow port
6 transfer flow passage
7 burner
8 electrode
9 pipe
10 fuel pipe
11 combustion-supporting gas pipe
12 hydrogen fuel source
13 flow rate adjustment valve
14 switching valve
15 oxygen source
16 flow rate adjustment valve
17 switching valve
21 auxiliary supply device
22 nozzle
23 carrier gas source
24 supply portion
25 flow rate adjustment valve
AG gas
F flame
Gm molten glass
Gr1 first glass raw material
Gr2 second glass raw material
Gx batch layer

## Claims

1. A manufacturing method for a glass article, comprising a melting step of heating and melting first glass raw materials in a melting furnace through combustion heating to form molten glass while the first glass raw materials are supplied onto the molten glass in the melting furnace,
wherein the melting step includes burning a fuel under a state in which at least one of part of the first glass raw materials or second glass raw materials that are different from the first glass raw materials are scattered in the melting furnace.

2. The manufacturing method for a glass article according to claim 1,
wherein the first glass raw materials are scattered in the melting furnace, and
wherein the first glass raw materials include one or more kinds of a Li raw material, a Na raw material, a K raw material, a Ca raw material, a Sr raw material, a Ba raw material, a Cu raw material, a B raw material, and a Si raw material.

3. The manufacturing method for a glass article according to claim 1,
wherein the second glass raw materials are scattered in the melting furnace, and
wherein the second glass raw materials include one or more kinds of a Li raw material, a Na raw material, a K raw material, a Ca raw material, a Sr raw material, a Ba raw material, a Cu raw material, a B raw material, and a Si raw material.

4. The manufacturing method for a glass article according to any one of claims 1 to 3,
wherein part of the first glass raw materials are scattered in the melting furnace by supplying the first glass raw materials into the melting furnace from a position above a liquid surface of the molten glass.

5. The manufacturing method for a glass article according to claim 4, wherein the liquid surface of the molten glass is covered with a batch layer formed of the first glass raw materials at a supply position of the first glass raw materials.

6. The manufacturing method for a glass article according to any one of claims 1 to 3, wherein the second glass raw materials are scattered in the melting furnace by supplying the second glass raw materials into the melting furnace from a position above a liquid surface of the molten glass, which is a position different from a supply position of the first glass raw materials.

7. The manufacturing method for a glass article according to claim 6, wherein the second glass raw materials are supplied from a position distant from a flame formed by burning the fuel and toward the flame.

8. The manufacturing method for a glass article according to any one of claims 1 to 3, wherein the fuel includes at least one of a hydrocarbon fuel or a hydrogen fuel.
